# EUROPEAN PATENT SPECIFICATION

(11) **EP 1 932 088 B1**
(45) Date of publication and mention of the grant of the patent: **21.10.2009**
(21) Application number: 06809402.8
(22) Date of filing: 25.09.2006
(51) Int. Cl.: G06F 17/30

(54) **A RECYCLE BIN FUNCTION**
PAPIERKORBFUNKTION
FONCTION DE CORBEILLE

(30) Priority: 26.09.2005 EP 05108888
(43) Date of publication of application: 18.06.2008
(73) Proprietor: Pace Plc, Saltaire Shipley West Yorkshire BD18 3LF (GB)
(72) Inventor: ESSER, Norbert, C., NL-5656 AA Eindhoven (NL); GORISSEN, Paulus, M., H., M., A., NL-5656 AA Eindhoven (NL); MICHIELS, Wilhelmus, P., A., J., NL-5656 AA Eindhoven (NL)
(74) Representative: Wood, Graham
(86) International application number: PCT/IB2006/053479
(87) International publication number: WO 2007/034460

(56) References cited:
- EP-A- 1 548 584
- US-A1- 2002 083 064
- US-A1- 2005 102 329
- US-B1- 6 446 091

## Description

This invention relates to a method and apparatus for implementing a recycle bin function for an electronic device.

The concept of a recycle bin function is well known in the computing art as a means of restoring accidentally deleted files to a computer's storage.

The Microsoft Windows 98 software implements a recycle bin, and the article ID 1314517, Rev. 2.1, "How the recycle bin stores files" available from http://support.microsoft.com discloses that when a file is deleted the file is stored in a recycle bin until after the recycle bin is emptied. Hence if a user accidentally deletes a file then they can restore it from the recycle bin up until the time when the recycle bin is emptied. Each hard disk on a computer has a recycle bin for storing files deleted from that hard disk. Opening a recycle bin and selecting to restore a deleted file causes the file to be restored to the same place in the directory structure that it was deleted from. Since the recycle bin is stored on the same hard disk that the file is deleted from, the storage space occupied by the deleted file is not released until after the recycle bin is emptied, using up valuable storage capacity. Furthermore files that are deleted from other devices like floppy disks or network hard disks cannot be restored later.

United States patent application publication US 2002/0083064 discloses a network recycle bin, whereby files from a local computer system are deleted by copying them into a network recycle bin on a server, immediately releasing the storage capacity previously occupied by the file on the local computer system. When the contents of the recycle bin are to be viewed, the file manager application on the local machine requests a recycle bin index from the file serving application on the server, the recycle bin index allowing the user of the local machine to view the files deleted to the server's recycle bin and select a file to be restored. However, the user cannot view the contents of the servers recycle bin unless they are connected to the network. Furthermore, if the storage capacity of the recycle bin becomes filled and further file deletions are required, then the further file deletions may have to overwrite the earlier file deletions making the earlier files irrecoverable.

EP154P584 discloses dealing with deletion of an application/file. During deletion of the application only application data is deleted and management data including a storage location of the file on one fixed remote further device is kept in order to be able to perform an undelete operation.

Many electronic devices, such as MP3 music players, are rarely connected to a network. However, these devices would greatly benefit from a recycle bin functionality that allowed files to be deleted to a recycle bin without the files continuing to occupy storage capacity on the device.

Furthermore, users of electronic devices would wish to delete files to a recycle bin without having to have concern over whether there is sufficient storage space available in the recycle bin or not.

It is therefore an object of the invention to improve on the known art.

According to a first aspect of the invention, there is provided a method for implementing a recycle bin function for a first electronic device, the electronic device comprising data storage for storing electronic files, the method comprising:
- receiving an indication to delete a file stored in the data storage;
- determining a further electronic device storing the file ;
- storing, in the data storage, reference to:
   ○ the further electronic device; and
   ○ the file stored in the further electronic device; and
- releasing the data storage capacity occupied by the file in the data storage;
- characterised in that the determining is by means of searching for the file in further electronic devices.

Owing to the first aspect of the invention, the user of a first electronic device can view the deleted files that he/she is able to restore from a further electronic device, without having to be connected to the further electronic device. The first electronic device may read its stored references to deleted files to enable a list of restorable files to be created for the user to view without the need to connect to the further electronic device.

Furthermore, the storage capacity taken up by a file on the first electronic device is released when the file is deleted, and the storage capacity can be re-used for other purposes without destroying the possibility of restoring the deleted file later. A reference to a deleted file only requires a very small amount of storage capacity, and the storage capacity required by a reference is typically vastly smaller than the storage capacity required by a file.

Advantageously, a file to be deleted from the first electronic device may contain metadata including a reference to where the file is stored on a further electronic device. Hence a file on a first electronic device may be indicated for deletion, and reference to the file on the further electronic device read from the file's metadata. Then the reference can be stored on the first electronic device, and the storage capacity on the first electronic device released for other uses, all without even needing to connect to the further electronic device.

In addition, when an indication to delete a file is received, the first electronic device may select a convenient further electronic device, write the file to the further electronic device, store a reference on the first electronic device to the file on the further electronic device, and release the storage capacity occupied by the file on the first electronic device. The further electronic device that is selected may be the device that happens to be connected at the time, that has sufficient available storage capacity, that has the highest data transfer rate, that has the lowest access time, that is most frequently connected, or that most deleted files have been written to in the past.

The first electronic device may store references to files written to a plurality of further electronic devices, such that the potential recycle bin storage space available to a user becomes practically inexhaustible.

Furthermore, the deleted file references may be grouped together in a recycle bin directory. This allows one reference from all the references in the recycle bin directory to be selected to indicate that the file corresponding to that reference should be retrieved to the first device.

Advantageously, when a user chooses to restore an accidentally deleted file, the deleted file is retrieved from the further electronic device to the data storage of the first electronic device. The retrieved file may be stored in the data storage of the first electronic device in the same location that the file was deleted from, or the file may be stored in a default location or in a location specified by the user. Furthermore, the file to be retrieved could be previewed by the user before fully retrieving it and storing it in the data storage of the first electronic device.

In addition, the first electronic device may be a network device that is accessible via one or more additional electronic devices. When an indication to delete a file in the first electronic device is received from a user via an additional electronic device, a reference to a further electronic device storing the file is stored in the first electronic device, and the storage capacity occupied by the file in the first electronic device released. Then another user accessing the first electronic device via another additional electronic device is able to view the reference and restore the file deleted by the other user. The further electronic device may be any suitable electronic device such as one of the additional electronic devices, or a different electronic device also connected to the first electronic device.

According to a second aspect of the invention, apparatus configurable to implement a recycle bin function in a first electronic device is provided, the apparatus comprising:
- data storage means operable to store electronic files; and;
- processing means operable to:
   ○ receive an indication to delete a file stored in the data storage means;
   ○ determine a further electronic device storing the file ;
   ○ store, in the data storage means, reference to:
      ■ the further electronic device; and
      ■ the file; and
   ○ release the data storage capacity occupied by the file in the data storage means;
- **characterised in that** the further electronic device storing the file is determined by searching for the file in the further electronic devices.

Owing to the second aspect of the invention, the user of an (first) electronic device can view references to the deleted files that he/she is able to undelete from a further electronic device, without having to be connected to the further electronic device. The first electronic device may read its stored references to deleted files to enable a list of restorable files to be created for the user to view without the need to connect to the further electronic device.

Advantageously, when a user chooses to restore an accidentally deleted file, the deleted file is retrieved from the further electronic device to the data storage of the first electronic device. The retrieved file may be stored in the data storage of the first electronic device in the same location that the file was deleted from, or the file may be stored in a default location or in a location specified by the user. Furthermore, the file to be retrieved could be previewed by the user before fully retrieving it and storing it in the data storage of the first device.

Embodiments of the invention enable a flexible and convenient way of storing deleted files in a recycle bin on a further electronic device, such that the storage capacity taken up by the file deleted from the first electronic device may be released and used for other purposes. References to the deleted files are conveniently stored on the first electronic device, enabling users of the first eletronic device to browse the deleted-files-without requiring a connection to a further electronic device storing the files. Users do not have to remember the network locations of further electronic devices, since the network locations are stored within the references to the deleted files. Files may be deleted to several different further electronic devices, and references to the files deleted to the different further electronic devices may all be viewed via the first electronic device at the same time.

Embodiments of the invention will now be described, by way of example only, and with reference to the accompanying drawings, in which:-
Figures 1 a and 1 b show block diagrams of first and further electronic devices;
Figure 2 shows a flow diagram of deleting a file;
Figure 3 shows a flow diagram of deleting and then restoring a file;
Figure 4 shows a block diagram of one first device connected to multiple further devices and to an additional device controlled by a user; and
Figures 5a and 5b show block diagrams of an apparatus loading software to implement an embodiment of the invention.

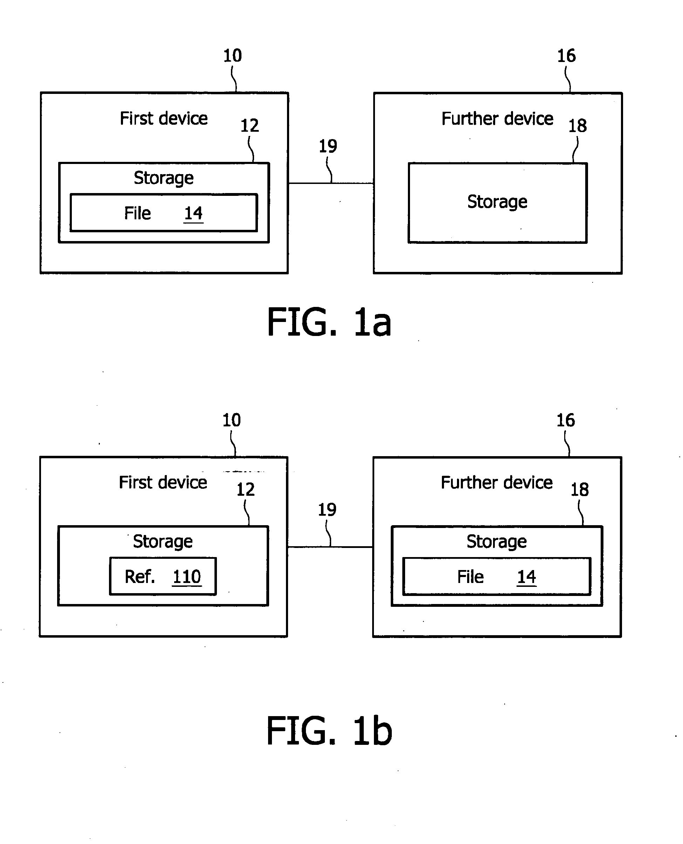

The Figure 1a and 1b apparatus diagrams comprise a first device 10 with storage 12 connected to a further device 16 with storage 18. The first and further devices are any electronic devices having storage for electronic files. For example an electronic device may be a personal computer, a laptop, a personal digital assistant, an electronic notebook, a digital camera, or a music player like for example the Apple IPOD^{™} device.

The data storage devices 12 and 18 are any form of electronic storage for storing a file 14. For example a storage device may be a non-volatile hard disk, an optical media like a compact disk, or a flash memory, or volatile memory like a random access memory.

The connection 19 between the first and further devices is any connection suitable for transferring electronic data like for example an electrical cable, an optic fibre, or a wireless connection. In an example embodiment the first electronic device 10 is a digital camera, the connection 19 is a Universal Serial Bus (USB) cable and the further device 16 is a Personal Computer. The connection 19 is present when a file is transferred between the first device and the further device, and may or may not be present at other times.

Figure 1 a shows a first device 10 storing file 14. Figure 1b shows the situation after file 14 has been written to a further device 16 and deleted from the first device 10. The first device 10 stores a reference 110 pointing to the file 14, and the further device 16 stores the deleted file 14.

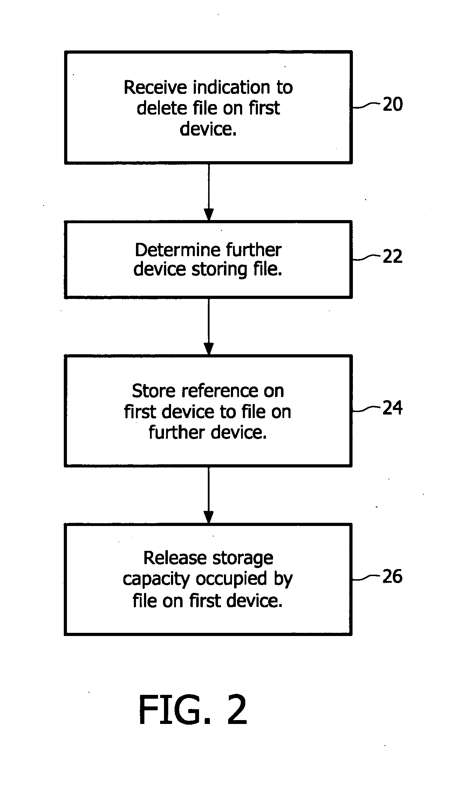

The Figure 2 flow diagram at block 20 shows a first device receiving an indication to delete a file on the first device's data storage. The indication was sent to the first device in response to a command to delete the file. The command originates from for example a keypad, a mouse, a touch-screen, or a computer program.

At block 22, a further device storing the file is determined. Many methods of determining a further device storing the file will be apparent to those skilled in the art, such as for example polling a plurality of devices to determine a device storing the file, interrogating a list comprising references to devices storing the file, or searching for the file on a network and identifying the network address where the file is stored.

In one embodiment, the further device is determined by selecting a further electronic device and writing the file to the further electronic device. The further electronic device may for example be selected as the device that has the largest available storage capacity, the device that is most often connected to the first device, the device that has the fastest data transfer speed, or the device that the user has indicated as being the preferred further device.

At block 24, a reference is stored on the first device that points to the determined further device and the file. In a preferred embodiment, the reference is stored in a recycle bin directory together with other references to other previously deleted files. This enables a user to identify all the potentially restorable files by viewing the recycle bin directory. Although this document generally describes that references point to files, it is to be understood that references may also point to folders, as will be apparent to those skilled in the art.

Finally, at block 26, the storage capacity occupied by the file on the first device is released so that the capacity can be put to other uses.

For example, a first device that is a client computer device receives an indication to delete a file, and then determines a further device by selecting a server computer device and writing the file to the server computer device. Next the client computer device stores in its data storage a reference to the server computer device and the path and filename of the file located on the server computer device. Then the storage capacity occupied by the file on the client computer device is released so that other files are allowed to use that storage capacity.

In a preferred embodiment, an indication to delete a file is received at block 20, and then at block 22 a further device storing the file is determined by reading metadata associated with the file to be deleted. At block 24, a reference is stored on the first device that points to the determined further device and the file. In a preferred embodiment, the reference is stored in a recycle bin directory together with other references to previously deleted files. This enables a user to identify all the potentially restorable files by viewing the recycle bin directory. Finally, at block 26, the storage capacity occupied by the file on the first device is released so that other files are allowed to use that storage capacity.

For example, a digital camera may receive an indication to delete a picture file, and then read the picture file's metadata to determine a particular personal computer PC1 (further device) that the picture file has already been downloaded to. For example the metadata may state "Picture 1 downloaded to PC1 in C:/Pictures", although many other ways of formatting the metadata will be apparent to the skilled reader and the metadata may comprise further information like for example the date the picture was downloaded. Next a reference to the personal computer (PC1) and the path of the file (C:/Pictures) and the filename (Picture 1) is stored on the digital camera. For example the reference stored on the digital camera may be "name = PC1, path = C:/Pictures, filename = picture 1 ", although many different ways of forming this reference will be apparent to those skilled in the art. In a further embodiment the reference to the further device comprises information on how the further device may be reached, for example at a particular network address. Next the storage capacity occupied by the picture file on the digital camera is released so that other files are allowed to use that storage capacity.

In a further example, a music player downloads an MP3 file from a particular computer. Then the music player is disconnected from the computer and carried around by the user. The copied MP3 file on the music player has associated metadata specifying the path and filename of the MP3 file on the particular computer. The user later sends an indication to delete the MP3 file from the music player, for example by pressing a button on the music player. The music player reads the MP3 file's metadata, and the music player stores a reference to the particular computer, path and filename where the MP3 file can be found according to the metadata. Then the music player releases the storage capacity occupied by the MP3 file, making the storage capacity available for other files to use.

It is to be understood that the main function of the reference is to enable the first device to access a particular file on a particular further device, and that the reference comprises any information enabling this function. For example the further device may be indicated by an optical drive letter "D:", the optical media within the drive having a name "CD1" and no explicit directory structure and one file called "File", such that the reference information comprises the information "D:, CD1, File". The reference may also include other information like for example the size of the deleted file, the date the file was deleted on and the date the file was last modified on.

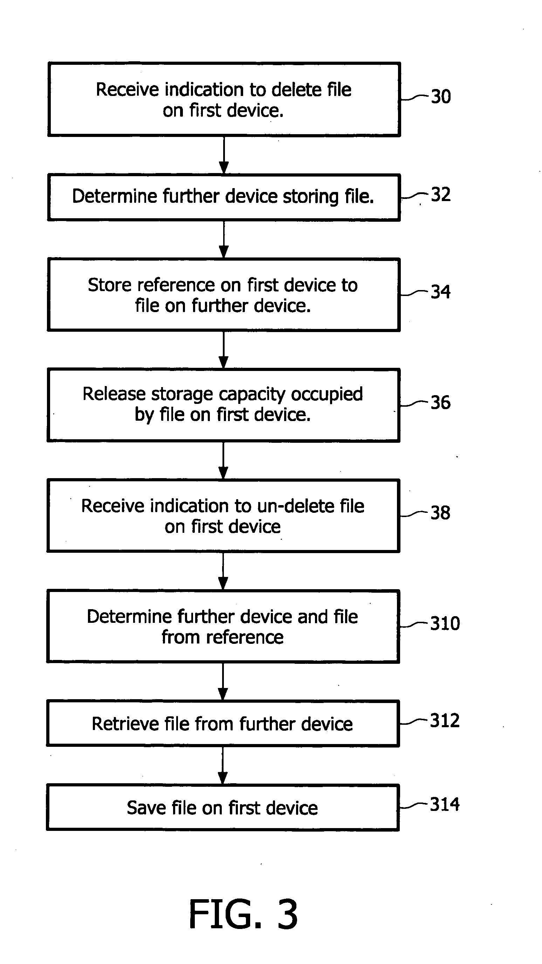

Figure 3 shows the flow diagram steps of Figure 2 together with additional steps for un-deleting a file from a first device. Steps 30, 32, 34, 36 correspond to the Figure 2 steps of 20, 22, 24, 26 respectively: At block 38 the first device receives an indication to un-delete (restore) a deleted file. This indication indicates to the first device the reference corresponding to the deleted file that is required to be restored. In an example embodiment, the user requests to view the contents of the recycle bin directory, and then indicates the reference corresponding to the file that they want to restore.

For example, to restore a file called "File 1" to a first computer device, the user would firstly double-click the left mouse button over an icon to open the recycle bin directory, and secondly double click their left mouse button over the reference comprising the filename "File 1". Many methods of enabling a user to indicate a reference corresponding to a file that is to be restored will be apparent to those skilled in the art, for example the reference may be presented to the user in different display formats, be accessed in different ways, and the user may use different input devices to navigate to and select the reference, like a keypad or touch-screen.

At block 310 the further device is determined from the reference, and then at block 312 the first device accesses the further device and retrieves the file. In an example embodiment the first device is a Global Positioning (GPS) device and the further device is a particular Personal Computer (PC1). The user of the GPS device indicates a reference corresponding to a file called "Map 1" that was previously deleted to the PC. The reference comprises the information "PC1, C:/GPS/Deleted maps/Map 1" and so the GPS device determines the further device to be the computer PC1 and retrieves the file "Map 1" from the PC1's C: drive in the directory "GPS/Deleted Maps".

At block 314 the file is saved to the first device. In an example embodiment the retrieved file is automatically saved to the first device in the same directory that the file was previously deleted from, however in a further embodiment the retrieved file is saved in a directory specified by the user, or in a still further embodiment the retrieved file is saved in a default directory for restored files. In another embodiment the retrieved file is opened or previewed so the user can evaluate it before deciding whether to save or discard it.

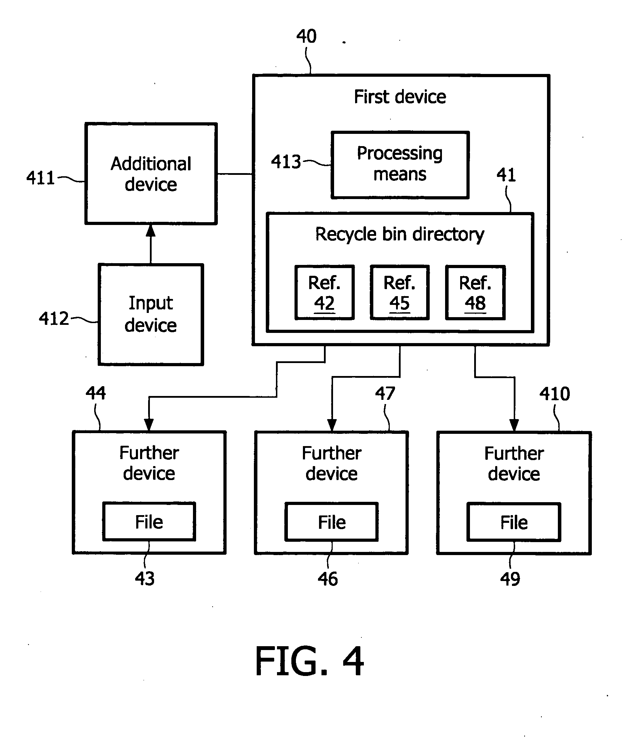

The example embodiment of Figure 4 shows how the invention is implemented using a plurality of further electronic devices and one additional electronic device used for controlling the first device. Figure 4 shows the state of the first and further devices after a file has just been deleted (step 36 of Figure 3). The first device 40 is storing a recycle bin directory 41 having references 42, 45, 48 pointing to three respective previously deleted files 43, 46, 49 stored on three respective further devices 44, 47, 410. The first device 40 is connected to the three respective further devices 44, 47, 410, and is also connected to one additional electronic device 411. The additional device 411 is also connected to an input device 412. The first electronic device 40 also has processing means 413 for controlling the steps shown in the Figure 3 flow diagram.

In an example embodiment, a user wishes to check whether a file 43 that they deleted earlier from first device 40 can be restored, and sends an indication to the first device 40 via the additional device 411 using the input device 412 that they wish to view the recycle bin directory 41. The recycle bin directory is displayed to them and they discover that file 43 is named in a reference 42. They then send an indication to the first device 40 via the additional device 411 using the input device 412 that the file 43 is to be undeleted, and the first device determines from the reference 42 that file 43 is stored on further device 44. The first device then retrieves the file 43 from further device 44, and saves file 43 on the first device.

An example usage of the Figure 4 apparatus is now described with reference to the flow diagram of Figure 3. In this example the input device 412 is a mouse, the additional device 411 is a client computer, the first device 40 is a server computer connected to the Internet and the further devices 44, 47, 410 are web server computers accessible via the Internet.

Initially file 43 is stored in data storage of the server computer 40. Then at block 30 of Figure 3, a user accesses server computer 40 via the client computer 411 and sends an indication using the mouse 412 to delete file 43 from the server computer 40.

Next, at block 32, the server computer 40 determines web server 44 as a further device storing file 43. It does this by firstly selecting web server 44 as having the largest available storage capacity, and secondly by writing file 43 onto web server 44.

At block 34 the server computer 40 stores in the recycle bin directory 41 a reference 42 pointing to the file 43 on the web server 44.

Then at block 36 the server computer 40 releases its storage capacity occupied by file 43, making the storage capacity available for other uses.

At a later point in time, the user realises that they deleted file 43 from the server computer 40 by accident, and uses mouse 412 to send a command to view the recycle bin directory 41. The recycle bin directory is displayed to the user on client computer 411, and the user discovers that a reference 42 to file 43 is in the recycle bin directory 41.

Next in block 38 the user sends an indication to the server computer 40 via the client computer 411 using the mouse 412 that the file 43 should be restored (un-deleted) to the server computer 40.

At block 310 the server computer 40 reads the reference 42 to determine that file 43 is stored on web server 44.

At block 312 the server computer 40 retrieves the file 43 from the web server 44, and at block 314 the file 43 is saved to the server computer 40, restoring the file.

In a variation to the above embodiment, instead of deleting file 43 to a web server, the file 43 is instead deleted to the client computer 411, or to another device connected to the server computer 40.

In a further variation, the client computer 411 is connected to more than one server computer 40, and the recycle bin directories 41 from each of the server computers 40 are all copied to the client computer 411 so that the user of the client computer 411 can un-delete files directly to their client computer 411.

In a still further variation the recycle bin directory is copied to another electronic device for temporary storage, or so that deleted files can be restored to the another electronic device. The another electronic device is a different device to at least one of the further electronic devices pointed to by the references in the recycle bin directory. Otherwise, in effect, the further device becomes a first device that has no references to files on other further devices.

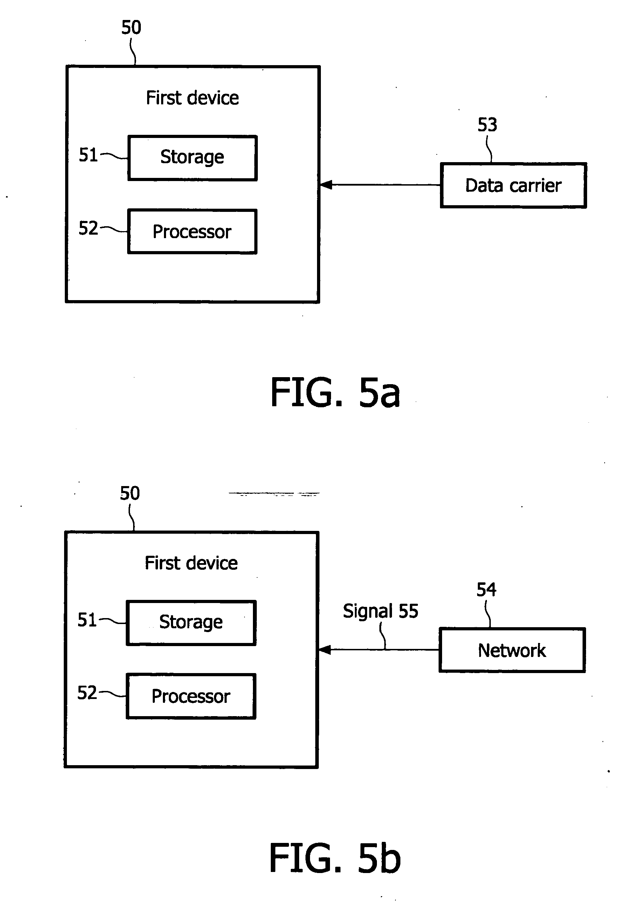

The recycle bin functionality described herein is preferably implemented using software. Figures 5a and 5b show first electronic devices 50 loading software for implementing the method of the invention. In an example embodiment, the software is provided to the user on a data carrier 53 like an optical disk, although other forms of data carrier like a flash memory will be apparent to the skilled reader. In a further embodiment the software is carried to the user's electronic device via a signal 55 from another electronic device via a network 54. For example a user's personal computer may download the software from a web server accessible over the internet. The software is stored in storage 51 and is executed by the processor 52 to implement embodiments of the invention.

## Claims

1. A method for implementing a recycle bin function for a first electronic device, the electronic device comprising data storage for storing electronic files, the method comprising:
- receiving (20) an indication to delete a file stored in the data storage;
- determining (22) a further electronic device storing the file
- storing (24), in the data storage, reference (110) to:
○ the further electronic device; and
○ the file stored in the further electronic device; and
- releasing (26) the data storage capacity occupied by the file in the data storage;
- **characterised in that** the determining (22) is by means of searching for the file in further electronic devices.

2. The method of claim 1 , wherein the determining (22) is by means of metadata associated with the file.

3. The method of claim 2 , wherein the metadata contained in the file contains a reference to a location the file is downloaded to and/or from prior to the receiving of the indication to delete.

4. The method of claim 2, wherein the metadata comprises a network reference.

5. The method of claim 4 , wherein the network reference is a URL.

6. The method of claim 1 , wherein the determining (22) includes by means of writing the file to a further electronic device.

7. A method according to claim 5, wherein the further electronic device is selected from plurality of electronic devices.

8. The method of claim 7, wherein the further electronic device is selected according to any one or more of the electronic device's available storage capacity, data transfer rate, or access time.

9. The method of claim 7, wherein the further electronic device is selected to be the device that is most often connected to the first device:

10. The method of claim 1 , wherein the storing (24) comprises storing the reference (110) in a recycle bin directory.

11. The method of claim 10, wherein the recycle bin directory is copied to another electronic device, the another electronic device a different device to at least one of the further electronic devices referenced in the recycle bin directory.

12. The method of claim 1 , further comprising:
- receiving (38) an indication to undelete the file from the first electronic device:
- determining (310) the further electronic device and the file according to the reference (110); and
- retrieving (312) the file from the further electronic device to the data storage

13. The method of claim 12, wherein the receiving an indication to undelete the file comprises receiving an indication to undelete the file pointed to by the reference.

14. The method of claim 12, further comprising saving (314) the retrieved file in the directory that the file was originally deleted from, or in a default directory, or in a directory specified by the user.

15. The method of claims 11 and 12, wherein a deleted file referenced in the copied recycle bin directory is retrieved to the another electronic device.

16. The method of any preceding claim, wherein the first electronic device is connected to an additional electronic device (411), the additional electronic device sending to the first electronic device the indication to delete a file stored in the data storage of the first electronic device.

17. Apparatus configurable to implement a recycle bin function in a first electronic device (10), the apparatus comprising:
- data storage means (12) operable to store electronic files (14); and;
- processing means (413) operable to:
○ receive an indication to delete a file (14) stored in the data storage means(12);
○ determine a further electronic device (16) storing the file (14)
○ store, in the data storage means (12), reference (110) to:
■ the further electronic device (16); and
■ the file (14); and
○ release the data storage capacity occupied by the file (14) in the data storage means(12);
- **characterised in that** the further electronic device (16) storing the file (14) is determined by searching for the file in the further electronic devices.

18. The apparatus of claim 17, wherein the processing means is further operable to:
- receive (38) an indication to undelete the file from the first electronic device;
- determine (310) the further electronic device and the file according to the reference; and
- retrieve (312) the file stored on the further electronic device to the first electronic device

19. A data carrier (53) storing software for implementing the method of any of claims 1 to 16.

20. A signal (55) carrying software for implementing the method of any of claims 1 to 16.

## Patentansprüche

1. Verfahren zum Implementieren einer Papierkorbfunktion für ein erstes elektronisches Gerät, wobei das elektronische Gerät einen Datenspeicher zum Speichern elektronischer Dateien umfasst, wobei das Verfahren Folgendes umfasst:
- Erhalten (20) einer Anzeige zum Löschen einer in dem Datenspeicher gespeicherten Datei,
- Ermitteln (22) eines die Datei speichernden weiteren elektronischen Geräts,
- Speichern (24), in dem Datenspeicher, einer Referenz (110) auf:
○ das weitere elektronische Gerät und
○ die in dem weiteren elektronischen Gerät gespeicherte Datei, und
- Freisetzen (26) der von der Datei in dem Datenspeicher eingelegten Datenspeicherkapazität,
- **dadurch gekennzeichnet, dass** das Ermitteln (22) mithilfe einer Suche nach der Datei in weiteren elektronischen Geräten erfolgt.

2. Verfahren nach Anspruch 1, bei dem das Ermitteln (22) mithilfe von mit der Datei assoziierten Metadaten erfolgt.

3. Verfahren nach Anspruch 2, bei dem die in der Datei enthaltenen Metadaten eine Referenz auf einen Ort enthalten, an den/von dem die Datei vor Erhalten der Anzeige zum Löschen heruntergeladen wird.

4. Verfahren nach Anspruch 2, bei dem die Metadaten eine Netzwerkreferenz umfassen.

5. Verfahren nach Anspruch 4, bei dem die Netzwerkreferenz eine URL ist.

6. Verfahren nach Anspruch 1, bei dem das Ermitteln (22) das Schreiben der Datei in ein weiteres elektronisches Gerät aufweist.

7. Verfahren nach Anspruch 5, bei dem das weitere elektronische Gerät aus mehreren elektronischen Geräten ausgewählt wird.

8. Verfahren nach Anspruch 7, bei dem das weitere elektronische Gerät gemäß der verfügbaren Speicherkapazität und/oder Datenübertragungsgeschwindigkeit und/oder Zugriffszeit ausgewählt wird.

9. Verfahren nach Anspruch 7, bei dem als das weitere elektronische Gerät das Gerät ausgewählt wird, das am häufigsten mit dem ersten Gerät verbunden ist.

10. Verfahren nach Anspruch 1, bei dem das Speichern (24) das Speichern der Referenz (110) in einem Papierkorbverzeichnis umfasst.

11. Verfahren nach Anspruch 10, bei dem das Papierkorbverzeichnis in ein weiteres elektronisches Gerät kopiert wird, wobei das weitere elektronische Gerät ein anderes Gerät als wenigstens eines der in dem Papierkorbverzeichnis referenzierten weiteren elektronischen Geräte ist.

12. Verfahren nach Anspruch 1, ferner umfassend:
- Erhalten (38) einer Anzeige zum Wiederherstellen der Datei aus dem ersten elektronischen Gerät,
- Ermitteln (310) des weiteren elektronischen Geräts und der Datei gemäß der Referenz (110) und
- Abrufen (312) der Datei aus dem weiteren elektronischen Gerät in den Datenspeicher.

13. Verfahren nach Anspruch 12, bei dem das Erhalten einer Anzeige zum Wiederherstellen der Datei das Erhalten einer Anzeige zum Wiederherstellen der Datei, auf die die Referenz zeigt, umfasst.

14. Verfahren nach Anspruch 12, ferner umfassend das Abspeichern (314) der ahgerufenen Datei in dem Verzeichnis, aus dem die Datei ursprünglich gelöscht wurde, oder in einem Standardverzeichnis oder in einem von dem Benutzer angegebenen Verzeichnis.

15. Verfahren nach Anspruch 11 und 12, bei dem eine gelöschte Datei, die in dem kopierten Papierkorbverzeichnis referenziert ist, in das andere elektronische Gerät abgerufen wird.

16. Verfahren nach einem der vorhergehenden Ansprüche, bei dem das erste elektronische Gerät mit einem zusätzlichen elektronischen Gerät (411) verbunden ist, wobei das zusätzliche elektronische Gerät die Anzeige zum Löschen einer in dem Datenspeicher des ersten elektronischen Geräts gespeicherten Datei an das erste elektronische Gerät sendet.

17. Vorrichtung, die zum Implementierten einer Papierkorbfunktion in einem ersten elektronischen Gerät (10) konfigurierbar ist, wobei die Vorrichtung Folgendes umfasst:
- Datenspeichermittel (12) zum Speichern elektronischer Dateien (14) und
- Verarbeitungsmittel (413) zum:
○ Erhalten einer Anzeige zum Löschen einer in dem Datenspeichermittel (12) gespeicherten Datei (14),
○ Ermitteln eines die Datei (14) speichernden weiteren elektronischen Geräts (16),
○ Speichern, in dem Datenspeichermittel (12), einer Referenz (110) auf:
• das weitere elektronische Gerät (16) und
• die Datei (14), und
○ Freisetzen der von der Datei (14) in dem Datenspeichermittel (12) belegten Datenspeicherkapazität,
- **dadurch gekennzeichnet, dass** das die Datei (14) speichernde weitere elektronische Gerät (16) durch Suchen nach der Datei in den weiteren elektronischen Geräten ermittelt wird.

18. Vorrichtung nach Anspruch 17, bei der das Verarbeitungsmittel ferner die folgende Aufgabe hat:
- Erhalten (38) einer Anzeige zum Wiederherstellen der Datei aus dem ersten elektronischen Gerät,
- Ermitteln (310) des weiteren elektronischen Geräts und der Datei gemäß der Referenz (110) und
- Abrufen (312) der in dem weiteren elektronischen Gerät gespeicherten Datei in das erste elektronische Gerät.

19. Datenträger (53), der Software zur Implementierung des Verfahrens nach einem der Ansprüche 1 bis 16 speichert.

20. Signal (55), das Software zur Implementierung des Verfahrens nach einem der Ansprüche 1 bis 16 trägt.

## Revendications

1. Procédé de mise en oeuvre d'une fonction Corbeille pour un premier dispositif électronique, le dispositif électronique comprenant un stockage de données destiné à stocker des fichiers électroniques, le procédé comprenant :
- l'opération consistant à recevoir (20) une indication pour supprimer un fichier stocké dans le stockage de données ;
- l'opération consistant à déterminer (22) un dispositif électronique supplémentaire stockant le fichier;
- l'opération consistant à stocker (24) une référence (110) dans le stockage de données en direction :
○ du dispositif électronique supplémentaire ; et
○ du fichier stocké dans le dispositif électronique supplémentaire ; et
- l'opération consistant à libérer (26) la capacité de stockage de données occupée par le fichier se trouvant dans le stockage de données ;
- **caractérisé en ce que** l'opération de détermination (22) a lieu grâce à un processus de recherche du fichier dans des dispositifs électroniques supplémentaires.

2. Procédé selon la revendication 1, l'opération de détermination (22) ayant lieu grâce à des métadonnées qui sont associées au fichier.

3. Procédé selon la revendication 2, les métadonnées contenues dans le fichier contenant une référence vers un emplacement à partir duquel et/ou en direction duquel le fichier est téléchargé avant l'opération consistant à recevoir l'indication de suppression.

4. Procédé selon la revendication 2, les métadonnées comportant une référence de réseau.

5. Procédé selon la revendication 4, la référence de réseau étant une adresse URL.

6. Procédé selon la revendication 1, l'opération de détermination (22) incluant des moyens permettant d'écrire le fichier à un dispositif électronique supplémentaire.

7. Procédé selon la revendication 5, le dispositif électronique supplémentaire étant sélectionné parmi une pluralité de dispositifs électroniques.

8. Procédé selon la revendication 7, le dispositif électronique supplémentaire étant sélectionné en fonction de l'un des éléments ou de plusieurs des éléments suivants : disponibilité en capacité de stockage, vitesse de transfert de données ou durée d'accès du dispositif électronique.

9. Procédé selon la revendication 7, le dispositif électronique supplémentaire étant sélectionné de sorte à être le dispositif qui est connecté le plus fréquemment au premier dispositif.

10. Procédé selon la revendication 1, l'opération de stockage (24) comprenant le stockage de la référence (110) dans un dossier Corbeille.

11. Procédé selon la revendication 10, le dossier Corbeille étant copié vers un autre dispositif électronique, cet autre dispositif électronique étant un dispositif différent par rapport à l'un au moins des dispositifs électroniques supplémentaires référencés dans le dossier Corbeille.

12. Procédé selon la revendication 1, comprenant en outre :
- l'opération consistant à recevoir (38) une indication pour restituer le fichier à partir du premier dispositif électronique ;
- l'opération consistant à déterminer (310) le dispositif électronique supplémentaire et le fichier en fonction de la référence (110) ; et
- l'opération consistant à récupérer (312) le fichier à partir du dispositif électronique supplémentaire en direction du stockage de données.

13. Procédé selon la revendication 12, la réception d'une indication pour restituer le fichier comprenant la réception d'une indication pour restituer le fichier sur lequel la référence est pointée.

14. Procédé selon la revendication 12, comprenant en outre la sauvegarde (314) du fichier récupéré dans le dossier à partir duquel on avait initialement supprimé le fichier, ou bien dans un dossier par défaut, ou bien dans un dossier spécifié par l'utilisateur.

15. Procédé selon les revendications 11 et 12, un fichier supprimé référencé dans le dossier Corbeille copié étant récupéré vers l'autre dispositif électronique.

16. Procédé selon l'une quelconque des revendications précédentes, le premier dispositif électronique étant connecté à un dispositif électronique additionnel (411), le dispositif électronique additionnel envoyant au premier dispositif électronique l'indication de supprimer un fichier lequel est stocké dans le stockage de données du premier dispositif électronique.

17. Appareil configurable pour mettre en oeuvre une fonction Corbeille dans un premier dispositif électronique (10), l'appareil comprenant :
- des moyens de stockage de données (12) aptes à fonctionner pour stocker des fichiers électroniques (14) ; et
- des moyens de traitement (413) aptes à fonctionner pour :
○ recevoir une indication pour supprimer un fichier (14) stocké dans les moyens de stockage de données (12) ;
○ déterminer un dispositif électronique supplémentaire (16) stockant le fichier (14) ;
○ stocker une référence (110) dans les moyens de stockage de données (12) en direction :
■ du dispositif électronique supplémentaire (16) ; et
■ du fichier (14) ; et
○ libérer la capacité de stockage de données occupée par le fichier (14) se trouvant dans les moyens de stockage de données (12) ;
- **caractérisé en ce que** le dispositif électronique supplémentaire (16) stockant le fichier (14) est déterminé grâce à un processus de recherche du fichier dans les dispositifs électroniques supplémentaires.

18. Appareil selon la revendication 17, les moyens de traitement étant en outre aptes à fonctionner pour :
- recevoir (38) une indication pour restituer le fichier à partir du premier dispositif électronique ;
- déterminer (310) le dispositif électronique supplémentaire et le fichier en fonction de la référence ; et
- récupérer (312) le fichier stocké sur le dispositif électronique supplémentaire vers le premier dispositif électronique.

19. Support de données (53) stockant un logiciel pour mettre en oeuvre le procédé selon l'une quelconque des revendications 1 à 16.

20. Signal (55) portant un logiciel pour mettre en oeuvre le procédé selon l'une quelconque des revendications 1 à 16.
